Europäisches Patentamt

European Patent Office

Office européen des brevets

Veröffentlichungsnummer: **0 298 229**
**A2**

(12) **EUROPÄISCHE PATENTANMELDUNG**

(21) Anmeldenummer: **88108099.8**

(22) Anmeldetag: **20.05.88**

(51) Int. Cl.⁴: **B32B 31/10 , B29C 63/02**

(30) Priorität: **10.07.87 DE 3722835**

(43) Veröffentlichungstag der Anmeldung:
**11.01.89 Patentblatt 89/02**

(84) Benannte Vertragsstaaten:
**AT BE CH ES FR GB IT LI NL SE**

(71) Anmelder: **Firma Theodor Hymmen**
**Theodor-Hymmen-Strasse 3**
**D-4800 Bielefeld 1(DE)**

(72) Erfinder: **Der Erfinder hat auf seine Nennung**
**verzichtet**

(74) Vertreter: **Stracke, Alexander, Dipl.-Ing. et al**
**Jöllenbecker Strasse 164**
**D-4800 Bielefeld 1(DE)**

(54) Verfahren zum ein-oder beidseitigen Beschichten von Dünnplatten mit Folien od.dgl. unter Verwendung einer Bandpresse oder einer Kaschiermaschine.

㊳
    2.1 Die Dünnplatten werden bisher in einer Plattenreihe dem Preßspalt (3) einer Bandpresse (1) oder einer Kaschiermaschine zugeführt, und zwar in kontinuierlichem Betrieb zusammen mit der Folie (7) o.dgl., die auf die Dünnplatten aufkaschiert wird. Beim Einlaufen der Dünnplatten in den Preßspalt (3) kann ein Versatz der einlaufenden Platte zur vorauslaufenden Platte in der Förderebene oder quer zur Förderebene oder ein Abstützen auf die vorauslaufende Platte auftreten.

    2.2 Dies wird dadurch vermieden, daß die Dünnplatten an den einander zugewandten Stirnseiten mit fluchtenden oberen und unteren Begrenzungsflächen miteinander zu einem Plattenstrang (6a) verbunden werden, die Folie (7) aufkaschiert wird und aus dem Plattenstrang die Einzelplatten durch ein Trennen im Verbindungsbereich vereinzelt werden.

    2.3 Herstellung von Platten für die Möbelindustrie.

Fig. 1

EP 0 298 229 A2

## Verfahren zum ein- oder beidseitigen Beschichten von Dünnplatten mit Folien o.dgl. unter Verwenwendung einer Bandpresse oder einer Kaschiermaschine

Die Erfindung bezieht sich auf ein Verfahren zum ein- oder beidseitigen Beschichten von Dünnplatten mit Folien unter Verwendung einer Bandpresse oder einer Kaschiermaschine, deren Preßspalt die Dünnplatten und die Folie o.dgl. in kontinuierlichem Betrieb zugeführt werden.

Es ist ein Verfahren dieser Art bekannt, bei dem eine Reihe von Dünnplatten gleicher Dicke in das Maul einer Doppelbandpresse oder einer Kaschiermaschine eingeführt wird. Beim Durchlaufen des Preßspaltes, der bei der Doppelbandpresse durch die Arbeitstrume der endlosen Preßbänder begrenzt wird, werden auf die obere und die untere Begrenzungsfläche der Dünnplatten unter Druck und Hitze Folien oder harzgetränkte Papiere kaschiert, die anschließend im Stoßbereich zwischen zwei benachbarten Dünnplatten aufgeschnitten werden.

Die Dünnplatten (Dünnspanplatten, Hartfaserplatten o.dgl.) weisen eine Dicke von zwei bis zehn Millimetern auf. Aufgrund dieser geringen Plattendicke sowie von Fertigungs- und Zuschnittungenauigkeiten kann es vorkommen, daß die benachbarten Oberflächen zweier Dünnplatten nicht mehr miteinander fluchten, so daß eine Einführung in das Preßmaul bzw. in den Preßspalt mit aneinanderliegenden Stirnflächen benachbarter Dünnplatten nicht gewährleistet ist. Bei fehlender ganzflächiger Abstützung zwischen zwei benachbarten Platten im Bereich ihrer Stirnwände besteht auch die Gefahr, daß die nachfolgende Platte sich auf die vorauslaufende Platte aufschiebt oder daß zwischen zwei benachbarten Dünnplatten ein zu großer Abstand besteht, so daß in diesem Bereich die aufzukaschierende Folie o.dgl. nicht das erforderliche Widerlager findet und es zu einer Haftung der Folie am endlosen Preßband kommen kann. Die Beschickung der Doppelbandpresse mit Dünnplatten, die sich im Stoßbereich aufeinander abstützen, kann eine Zerstörung der endlosen Preßbänder ergeben.

Der Erfindung liegt die Aufgabe zugrunde, ein Verfahren zum Beschichten der eingangs genannten Art so zu gestalten, daß beim Einlaufen der Dünnplatten in den Preßspalt der Bandpresse oder der Kaschiermaschine ein Versatz der einlaufenden Platte zur vorauslaufenden Platte in der Förderebene oder quer zur Förderebene oder ein Abstützen einer Dünnplatte auf der vorauslaufenden Platte vermieden wird.

Diese Aufgabe wird erfindungsgemäß dadurch gelöst, daß die Dünnplatte an den einander zugewandten Stirnseiten mit fluchtenden oberen und unteren Begrenzungsflächen miteinander zu einem Plattenstrang verbunden, die Folien o.dgl. aufkaschiert und hinter der Presse aus dem Plattenstrang die Einzelplatten durch ein Trennen im Verbindungsbereich vereinzelt werden.

Durch die Verbindung der einzelnen Dünnplatten zu einem Plattenstrang wird nicht nur gewährleistet, daß mittels der Bandpresse oder der Kaschiermaschine die Folien o.dgl. einwandfrei unter Vermeidung von Betriebsstörungen aufkaschiert werden können, sondern es werden auch die Mittel zum Zuführen der Dünnplatten zur Bandpresse wesentlich vereinfacht.

Weitere Merkmale der Erfindung ergeben sich aus den Unteransprüchen und der folgenden Beschreibung von in den Zeichnungen dargestellten Ausführungsbeispielen. Es zeigen:

Fig. 1 einen Teil der Kaschieranlage mit einer Bandpresse in schematischer Darstellung und teilweise geschnitten und

Fig. 2 bis 6 verschiedene Verbindungsmöglichkeiten zwischen zwei benachbarten Dünnplatten und

Fig. 7 einen weiteren Plattenstrang in perspektivischer Darstellung.

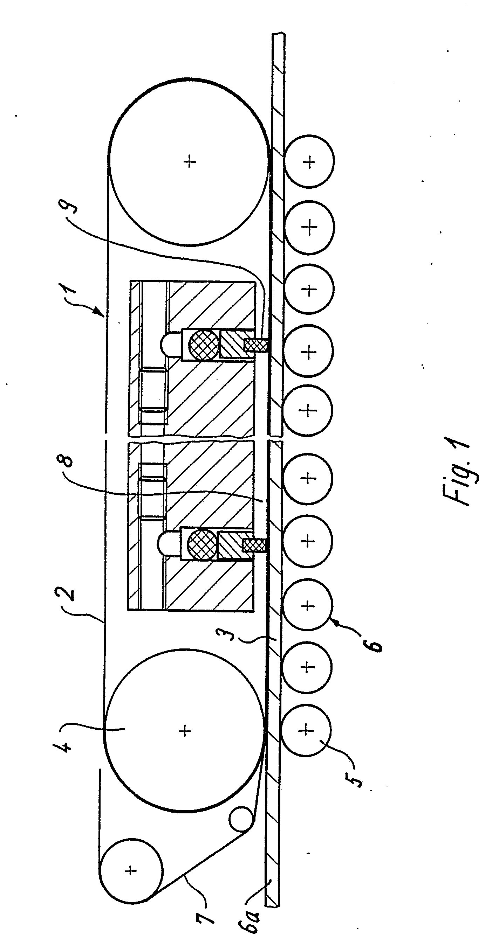

Die in der Fig. 1 aufgezeigte Bandpresse 1 ist mit einem endlosen Preßband 2 ausgerüstet, dessen Arbeitstrum einen Preßspalt 3 einseitig begrenzt und zusammen mit der Walze 4 und einer Rolle 5 einer Rollenbahn 6 das Maul zum Einführen des Plattenstranges 6a sowie der Folie 7 bildet. Der Arbeitsdruck im Preßspalt 3 wird durch ein Druckkissen 8 erzeug, das gegenüber dem Preßband 2 durch eine umlaufende Dichtung 9 abgedichtet ist.

Der Plattenstrang 6a besteht aus einzelnen Dünnplatten gleicher Dicke, die im Bereich ihrer Stirnflächen miteinander verbunden sind.

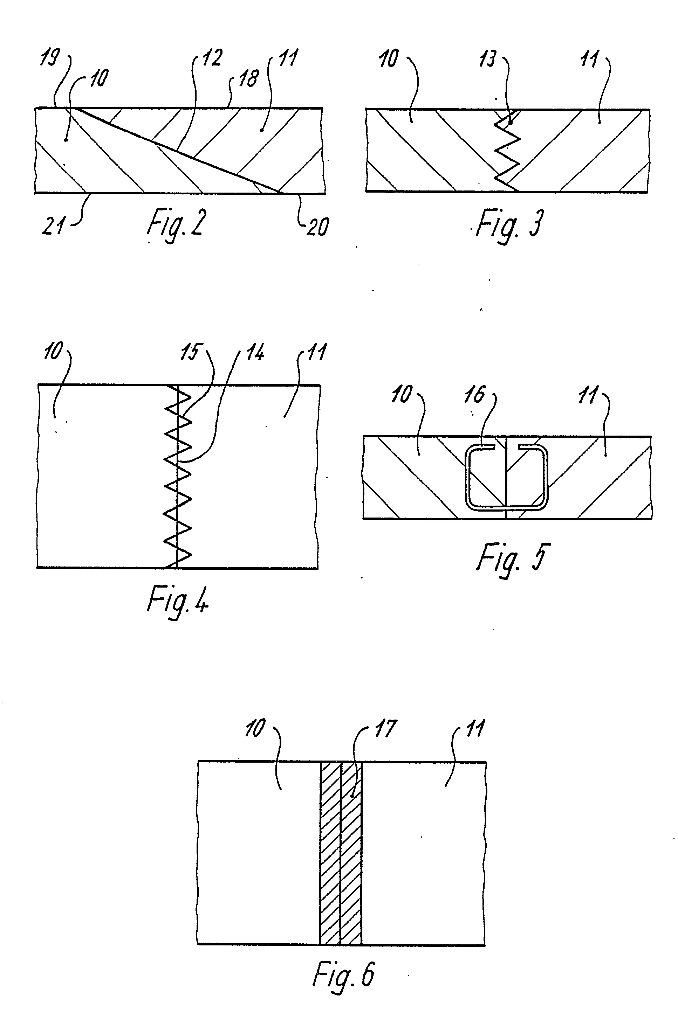

Nach dem Ausführungsbeispiel nach der Fig. 2 werden die Dünnplatten 10 und 11 durch ein Schäften miteinander verbunden. Die schrägverlaufenden Verbindungsflächen 12 der Dünnplatten werden miteinander verleimt.

Bei dem Ausführungsbeispiel nach der Fig. 3 werden die Dünnplatten 10 und 11 über Keilzinken 13, die ineinandergreifen, formschlüssig verbunden. Die Verbindungsflächen werden miteinander verleimt.

Aus der Fig. 4 ergibt sich, daß man die Dünnplatten 10 und 11 auch durch Nähen miteinander verbinden kann. In dieser Figur ist der zickzackförmig zu beiden Seiten der Stoßfläche 14 verlaufenden Naht das Bezugszeichen 15 zugeordnet.

Beim Gegenstand der Fig. 5 werden die Dünnplatten 10 und 11 durch Klammern 16 miteinander verbunden, die vollständig in die Platten eingebracht werden.

In der Fig. 6 ist ein Ausführungsbeispiel dargestellt, bei dem die Dünnplatten 10,11 durch einen Klebestreifen 17 miteinander verbunden sind.

Das Aneinanderfügen mittels Klebestreifen oder das Verbinden durch Nähen kann ein-oder beidseitig vorgenommen werden.

Die Dünnplatten werden in der Weise miteinander verbunden, daß die oberen Begrenzungsflächen 18,19 bzw. 20,21 miteinander fluchten.

Es besteht auch die Möglichkeit, die Dünnplatten durch Stumpfkleben miteinander zu verbinden.

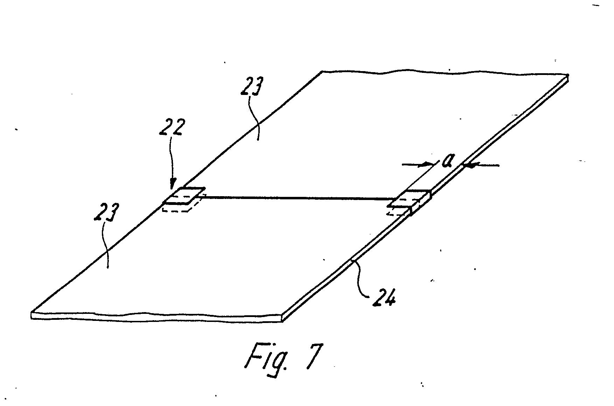

Die Fig. 7 zeigt einen Plattenstrang in perspektivischer Darstellung, der durch Dünnspanplatten gebildet wird, die dazu neigen, an den Ecken sich hochzustellen und im allgemeinen gewellt sind.

Zum Zurückformen dieser hochstehenden Ecken in eine flächenbündige Lage im Bereich zweier benachbarter Einzelplatten des Plattenstranges wird eine U-förmige Klebelasche 22 verwendet, die die Eckbereiche zweier benachbarter Einzelplatten 23 des Plattenstranges erfaßt, und zwar an drei Seiten. Die Lasche kann sich um das Maß a von den Seitenrändern 24 des Plattenstranges nach innen erstrecken. Dieses Maß kann z.B. 50 mm betragen.

Durch eine derartige U-förmige Klebelasche werden die Ecken ausreichend zurückgeformt und verfestigt.

Die Anbringung der Klebelaschen im Eckbereich zweier benachbarter Dünnspanplatten eines Plattenstranges kann zusätzlich zu einer Verbindungsart vorgenommen werden, die im vorhergehenden beschrieben und in den Figuren dargestellt wurde.

## Ansprüche

1. Verfahren zum ein- oder beidseitigen Beschichten von Dünnplatten mit Folien oder harzgetränkten Papieren unter Verwendung einer Bandpresse oder einer Kaschiermaschine, deren Preßspalt die Dünnplatten und die Folie oder Papiere o.dgl. in kontinuierlichem Betrieb zugeführt werden, **dadurch gekennzeichnet ,** daß die Dünnplatten (10,11) an den einander zugewandten Stirnseiten mit fluchtenden oberen und unteren Begrenzungsflächen (18,19;20,21) miteinander zu einem Plattenstrang (6) verbunden, die Folie (7) oder Papiere o.dgl. aufkaschiert und aus dem Plattenstrang die Einzelplatten durch ein Trennen im Verbindungsbereich vereinzelt werden.

2. Verfahren nach Anspruch 1, dadurch gekennzeichnet, daß die Dünnplatten im Bereich benachbarter Stirnseiten durch einen Klebestreifen miteinander verbunden werden.

3. Verfahren nach Anspruch 1, dadurch gekennzeichnet, daß die Dünnplatten im Bereich benachbarter Stirnseiten durch Schäften, Keilzinken, Nähen, Stumpfkleben o.dgl. verbunden werden.

4. Verfahren nach Anspruch 1, dadurch gekennzeichnet, daß als Verbindungsmittel U-förmige Klammern (16) verwendet werden.

5. Verfahren nach Anspruch 2 oder 3, dadurch gekennzeichnet, daß das Nähen oder Aneinanderfügen mittels Klebestreifen ein- oder beidseitig vorgenommen wird.

6. Verfahren nach einem der Ansprüche 1 bis 5, dadurch gekennzeichnet, daß zwei im Plattenstrang benachbarte Einzelplatten im Eckbereich durch U-förmige Klebelaschen miteinander verbunden werden.

7. Verfahren nach Anspruch 6, dadurch gekennzeichnet, daß die Klebelaschen von den Seitenkanten des Plattenstranges sich um das Maß a zur Innenseite des Plattenstranges erstrecken.

*Fig. 1*

EP 0 298 229 A2

Hymmen

Fig. 2

Fig. 3

Fig. 4

Fig. 5

Fig. 6

Fig. 7